(19) **Europäisches Patentamt**
**European Patent Office**
**Office européen des brevets**

(11) **EP 1 533 634 B1**

(12) **EUROPEAN PATENT SPECIFICATION**

(45) Date of publication and mention
of the grant of the patent:
**27.06.2012 Bulletin 2012/26**

(51) Int Cl.:
*G02B 6/255* *(2006.01)*    *G02B 6/12* *(2006.01)*
*C03C 3/04* *(2006.01)*    *C03C 13/04* *(2006.01)*
*G02B 6/036* *(2006.01)*    *H01S 3/067* *(2006.01)*

(21) Application number: **03762890.6**

(22) Date of filing: **07.07.2003**

(86) International application number:
**PCT/JP2003/008598**

(87) International publication number:
**WO 2004/005984 (15.01.2004 Gazette 2004/03)**

(54) **OPTICAL FIBER, OPTICAL FIBER COUPLER INCLUDING THE SAME, ERBIUM LOADED OPTICAL FIBER AMPLIFIER AND LIGHT GUIDE**

OPTISCHE FASER, FASEROPTISCHER KOPPLER DAMIT, ERBIUM GELADENER OPTISCHER FASERVERSTÄRKER UND LICHTLEITER

FIBRE OPTIQUE, COUPLEUR DE FIBRE OPTIQUE COMPRENANT CETTE FIBRE, AMPLIFICATEUR A FIBRE OPTIQUE DOPEE A L'ERBIUM ET GUIDE DE RAYONNEMENT LUMINEUX

(84) Designated Contracting States:
**DE FR GB IT**

(30) Priority: **09.07.2002 JP 2002199959**

(43) Date of publication of application:
**25.05.2005 Bulletin 2005/21**

(73) Proprietor: **FUJIKURA LTD.**
**Koto-ku**
**Tokyo 135-8512 (JP)**

(72) Inventors:
• **IKEDA, Masashi**
**Sakura-shi, Chiba 285-8550 (JP)**
• **NAKAYAMA, Masakazu**
**Sakura-shi, Chiba 285-8550 (JP)**
• **HIMENO, Kuniharu**
**Sakura-shi, Chiba 285-8550 (JP)**
• **OHTSUKA, Masaaki**
**Sakura-shi, Chiba 285-8550 (JP)**
• **OOHASHI, Masakazu**
**Sakura-shi, Chiba 285-8550 (JP)**
• **TANAKA, Daiichiro**
**Sakura-shi, Chiba 285-8550 (JP)**

(74) Representative: **Loisel, Bertrand**
**Cabinet Plasseraud**
**52 rue de la Victoire**
**75440 Paris Cedex 09 (FR)**

(56) References cited:
**EP-A- 0 762 159**    **EP-A- 0 785 448**
**EP-A- 1 202 089**    **EP-A1- 1 207 597**
**JP-A- 9 236 721**    **JP-A- 57 011 848**
**JP-A- 2001 066 439**    **US-A- 5 289 558**
**US-A- 5 381 503**    **US-A- 5 778 129**
**US-A- 5 933 561**    **US-A1- 2002 001 444**
**US-A1- 2002 025 131**

• **PATENT ABSTRACTS OF JAPAN vol. 1998, no. 01, 30 January 1998 (1998-01-30) & JP 09 236721 A (NIPPON TELEGR & TELEPH CORP <NTT>), 9 September 1997 (1997-09-09) & JP 09 236721 A (NIPPON TELEGR & TELEPH CORP <NTT>) 9 September 1997 (1997-09-09)**
• **PATENT ABSTRACTS OF JAPAN vol. 2000, no. 15, 6 April 2001 (2001-04-06) & JP 2000 356723 A (FUJIKURA LTD), 26 December 2000 (2000-12-26)**
• **PATENT ABSTRACTS OF JAPAN vol. 2000, no. 20, 10 July 2001 (2001-07-10) & JP 2001 066439 A (SAMSUNG ELECTRONICS CO LTD), 16 March 2001 (2001-03-16)**
• **HU A; FERRELL D; HERNANDEZ M: "Miniature optic fiber couplers for fiber optic gyros application" PROCEEDINGS OF THE SPIETHE INTERNATIONAL SOCIETY FOR OPTICAL ENGINEERING 1996 SPIE-INT. SOC. OPT. ENG USA, vol. 2837, November 1996 (1996-11), pages 324-334, XP002382383 Denver, CO, USA**

- **TAJIMA K: "ER3+-DOPED SINGLE-POLARISATION OPTICAL FIBERS" ELECTRONICS LETTERS, IEE STEVENAGE, GB, vol. 26, no. 18, 30 August 1990 (1990-08-30), pages 1498-1499, XP000108664 ISSN: 0013-5194**
- **KLINER D A V ET AL: "POLARIZATION-MAINTAINING AMPLIFIER EMPLOYING DOUBLE-CLAD BOW-TIE FIBER" OPTICS LETTERS, OSA, OPTICAL SOCIETY OF AMERICA, WASHINGTON, DC, US, vol. 26, no. 4, 15 February 2001 (2001-02-15), pages 184-186, XP001038937 ISSN: 0146-9592**
- **PATENT ABSTRACTS OF JAPAN vol. 009, no. 329 (P-416), 24 December 1985 (1985-12-24) & JP 60 154215 A (NIPPON DENSHIN DENWA KOSHA), 13 August 1985 (1985-08-13)**
- **SEGI T; OUCHI Y; NISHIWAKI K; SAKAI T; NISHIDE K; WADA A: "Polarization-maintaining EDFA for optical sensing application, composed of PANDA fiber based low loss and low cross-talk optical components" 2002 15TH OPTICAL FIBER SENSORS CONFERENCE TECHNICAL DIGEST. OFS 2002(CAT. NO.02EX533) 2002 IEEE, vol. 1, 10 May 2002 (2002-05-10), pages 289-292, XP002400410 Piscataway, NJ, USA**

**Description**

TECHNICAL FIELD

The present invention relates to an optical fiber that is employed in an optical component used for optical communications, to an optical fiber coupler, to an erbium-doped optical fiber amplifier, and to an optical waveguide using the same. More specifically, the present invention relates to an optical fiber that can couple with another optical fiber having a different mode field diameter (MFD) with low splice loss and a sufficient splicing strength when fusion-spliced together, to an optical fiber coupler, to an erbium-doped optical fiber amplifier, and to an optical waveguide using the same.

This specification is based on a Japanese Patent Application (Japanese Patent Application No. 2002-199959), the content of which is incorporated herein by reference.

Description of Related Art

When two optical fibers having different mode field diameters (hereinafter referred to as "MFDs") are fusion-spliced together, splice loss occurs. A method for reducing such splice loss is known in which optical fibers are preheated before they are fusion-spliced, or optical fibers are subjected to a heat treatment by means of additional electrical discharge, for example, after they are fusion-spliced together so that a dopant contained in the core diffuses into the cladding and the MFD of the optical fiber having a smaller MFD is enlarged, which results in reduction in the difference of the MFDs of the optical fibers.

The change in the core radius due to diffusion of a dopant contained in a core of an optical fiber is expressed by the following Formula (1):

$$r_2 = (r_1{}^2 + 4Dt)^{1/2} \quad \cdots (1)$$

In the above-described Formula (1), $r_1$ is a core radius before the diffusion of the dopant and $r_2$ is core radius after the diffusion of the dopant. D is a diffusion coefficient and "t" is the length of time for which the optical fibers are heated. Since the normalized frequency of an optical fiber ($\propto$ core radius x $\Delta^{1/2}$) remains constant even when the dopant in the core diffuses, the MFD is proportional to the core radius $r_2$ in the above-described Formula (1). Thus, as the core radius $r_2$ is enlarged according to the above-described Formula (1) by causing the dopant in the core to diffuse, the MFD enlarges accordingly.

Upon fusion-splicing optical fibers having different MFDs together, in order to reduce the splice loss by application of heat treatment, such as additional electrical discharge after fusion splicing, several requirements should be met. As such requirements, the speed of enlargement of the MFD of each of optical fibers to be spliced together with respect to heating time must be different, i.e., diffusion coefficients of the dopants must be different. In addition, the speed of enlargement of the MFD of an optical fiber having a smaller MFD with respect to heating time must be larger, i.e., $D_{LM} < D_{SM}$ (where $D_{LM}$ is the diffusion coefficient of the optical fiber having a larger MFD and $D_{SM}$ is the diffusion coefficient of the optical fiber having a smaller MFD).

If these requirements are met, the speed of enlargement of the MFD of the optical fiber having a smaller MFD will become greater than the speed of enlargement of the MFD of the optical fiber having a larger MFD when a dopant contained in the core is made diffused by application of heat, for example by means of additional electrical discharge. As a result, the difference in the MFDs will be reduced with respect to heating time, and the splice loss is reduced.

One example of well-known methods for splicing optical fibers having different MFDs together is a technique disclosed in Japanese Patent No. 2911932. In this method, upon fusion-splicing a single-mode optical fiber which has zero-dispersion wavelength around 1.3 $\mu$m (hereinafter referred to as "single-mode optical fiber") that is used as an optical transmission path for optical communications and an optical fiber having a numerical aperture between 0.24 and 0.15 (hereinafter referred to as "high numerical aperture optical fiber") together, splice loss can be reduced by heat treatment during the fusion splicing and post-heat treatment after fusion splicing. The single-mode optical fiber has a core diameter of about 8 $\mu$m, an MFD of about 10 $\mu$m, and a refractive index difference $\Delta$n between the core and the cladding of about 0.004.

In contrast, the high numerical aperture optical fiber has a smaller core diameter and an MFD than the single-mode optical fiber with a core diameter of about 4 $\mu$m and an MFD of about 4 $\mu$m, and has a relatively large refractive index difference $\Delta$n between the core and the cladding of between 0.02 and 0.008. Therefore, the concentration of a dopant in the core of the high numerical aperture optical fiber is higher than the concentration of a dopant in the core of the single-mode optical fiber. Since the concentration of a dopant in the core is higher in the high numerical aperture optical fiber, the core thereof has a lower softening temperature and consequently the diffusion rate of the dopant at a given temperature is significantly greater compared to the single-mode optical fiber. As a result, the diffusion coefficient of the high numerical aperture optical fiber is higher than the diffusion coefficient of the single-mode optical fiber. The above-described requirements for reducing the splice loss are satisfied because the high numerical aperture optical fiber has a smaller MFD and a larger diffusion coefficient while the single-mode optical fiber has a larger MFD and smaller diffusion coefficient. In a case in which optical fibers that have different MFDs and similar diffusion coefficients are fusion-spliced together, it is difficult to realize low splice loss using the splicing method mentioned above. A method for reducing splice loss for such cases is known in which a cladding of an optical fiber having a smaller MFD is doped with fluorine such that the diffusion rate of the dopant in the core of this optical fiber becomes higher than the diffusion rate of a dopant in a core of an optical fiber having a larger MFD. One example of this technique is a method for fusion-splicing an erbium-doped optical fiber employed in an erbium-doped optical fiber amplifier and a dispersion-shifted single-mode optical fiber together.

In this method, the MFD of the erbium-doped optical fiber is 5 $\mu$m and the MFD of the dispersion-shifted single-mode optical fiber is 8 $\mu$m at a signal wavelength of 1550 nm, for example. The cladding of the erbium-doped optical fiber is doped with fluorine such that the diffusion rate of a dopant contained in the core into the cladding is increased. Although the dopant in the core diffuses to the cladding and the MFD is enlarged by the application of heat after fusion-splicing the erbium-doped optical fiber and the dispersion-shifted single-mode optical fiber together, the splice loss is reduced to 0.05 dB or smaller since the speed of enlargement of the MFD of the erbium-doped optical fiber that has a smaller MFD is greater than the speed of enlargement of the MFD of the dispersion-shifted single-mode optical fiber.

Examples of fusion-splicing optical fibers having different MFDs together include connecting between a fused and elongated optical fiber coupler employed in an erbium-doped optical fiber amplifier and an erbium-doped optical fiber or a single-mode optical fiber.

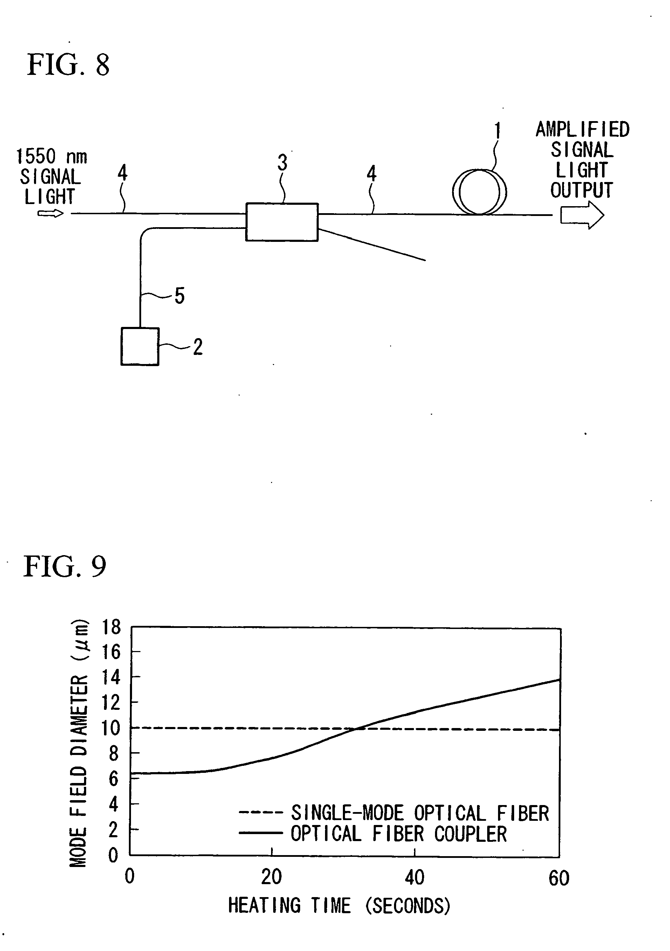

FIG. 8 is a schematic diagram illustrating one example of the constitution of an erbium-doped optical fiber amplifier.

The erbium-doped optical fiber amplifier of this example generally includes an erbium-doped optical fiber 1, a 980 nm semiconductor laser 2 that is an excitation light source for exciting the erbium-doped optical fiber 1, an optical fiber coupler 3 for multiplexing the excitation light and the signal light, a single-mode optical fiber 4 for connecting these components, and a 980 nm cut-off shifted single-mode optical fiber 5.

In the erbium-doped optical fiber amplifier of this example, the erbium-doped optical fiber 1 and the optical fiber coupler 3 are optical components that include an optical fiber.

The erbium-doped optical fiber 1 and the optical fiber coupler 3 are fusion-spliced, and the optical fiber coupler 3 and the single-mode optical fiber 4 are fusion-spliced.

The MFD of the single-mode optical fiber 3 for light in a 1550 nm wavelength band is about 10 $\mu$m. The effective cut-off wavelength of the single-mode optical fiber 3 is 1300 nm or less.

The effective cut-off wavelength of the erbium-doped optical fiber 1 and the optical fiber coupler 3 must be smaller than 980 nm since the light output from the 980 nm semiconductor laser 2 is required to be propagated in a single mode in the erbium-doped optical fiber 1 and the optical fiber coupler 3.

It is required that the optical fiber coupler 3 propagate light with a wavelength of 980 nm in a single mode, and propagate light at a wavelength of 1550 nm with low loss. However, since the effective cut-off wavelength of the optical fiber coupler 3 is located in a wavelength region far shorter than 1550 nm, the bending loss tends to be relatively increased when propagating light in a 1550 nm wavelength band. Accordingly, the optical fiber employed in the optical fiber coupler 3 should have a large relative refractive index difference between the core and the cladding, and should have a low bending loss in a 1550 nm wavelength band. Furthermore, to reduce the effective cut-off wavelength of the optical fiber coupler 3 to 980 nm or lower while increasing the relative refractive index difference between the core and the cladding of the optical fiber, the core diameter of the optical fiber included in the optical fiber coupler 3 should be smaller. Consequently, the MFD is reduced accordingly.

On the other hand, the core doped with erbium of the erbium-doped optical fiber 1 is required to be excited by excitation light output from the 980 nm semiconductor laser 2 that is an excitation light source. Accordingly, the erbium-doped optical fiber 1 generally has a high numerical aperture in order to enhance the excitation efficiency. Thus, the MFD is reduced accordingly

It should be noted that in order to obtain a high-performance erbium-doped optical fiber amplifier, upon fusion-splicing an erbium-doped optical fiber and an optical fiber coupler, and fusion-splicing an optical fiber coupler and a single-mode optical fiber, they are required to be spliced with low loss, and the spliced portion is required to have a sufficient strength for practical use.

The size of MFD for light having a wavelength of 1550 nm is about 10 $\mu$m in a single-mode optical fiber, about 6.5 $\mu$m in an optical fiber coupler, and about 5.5 $\mu$m in an erbium-doped optical fiber.

An optical fiber coupler is required to be spliced with either a single-mode optical fiber or an erbium-doped optical fiber with low loss, as well as to have a sufficient strength for practical use. Although the MFD of an optical fiber coupler has been conventionally small, the relative refractive index difference between the core and the cladding of an optical fiber included in an optical fiber coupler is increased so as to reduce the bending loss for light in a 1550 nm wavelength band, which results in an increase in the numerical aperture. Accordingly, splice loss between an optical fiber coupler and a single-mode optical fiber can be reduced.

Here, FIG. 9 is a diagram illustrating the change in the MFDs with respect to heating time of an optical fiber coupler and a single-mode optical fiber.

FIG. 9 indicates that a minimum splice loss is attained at a point in which the MFDs of the optical fiber coupler and the single-mode optical fiber are matched. It should be noted that although the above-described Formula (1) prescribes that the square of the MFD is proportional to heating time, the square of the MFD is not necessarily proportional to heating time since the diffusion coefficient varies depending on the heating temperature.

However, as for the splicing strength, the fusion method disclosed in Japanese Patent No. 2911932 is not necessarily the one that can provide a sufficient strength. When an optical fiber coupler and a single-mode optical fiber are fusion-spliced according to the fusion method disclosed in Japanese Patent No. 2911932, a heating time of about 30 seconds is required until splice loss reaches the lowest value. When optical fibers of the same kind are fusion-spliced with a conventional fusion splicing method, only 2 to 3 seconds of splicing time is sufficient for a fusion splicing the optical fibers with low splice loss and a sufficient strength. A fusion splicing time for fusion-splicing an optical fiber coupler and a single-mode optical fiber of about 30 seconds is considerably longer than the fusion splicing optical fibers of the same kind. Thus, the splicing strength between an optical fiber coupler and a single-mode optical fiber is not necessarily comparable to the splicing strength between the optical fibers of the same kind.

Furthermore, when splicing an erbium-doped optical fiber and an optical fiber coupler, it is difficult to achieve low loss and to obtain a spliced portion having a sufficient strength for practical use with the method disclosed in Japanese Patent No. 2911932 or other methods. This is because the values of the MFD of an erbium-doped optical fiber and the MFD of an optical fiber coupler are relatively close, and both the erbium-doped optical fiber and the optical fiber coupler have high numerical apertures. Since an erbium-doped optical fiber and an optical fiber coupler have high numerical apertures, concentrations of the dopant in the core are high and diffusion coefficients are large in the erbium-doped optical fiber and the optical fiber coupler. As a result, the heating time of a spliced portion required until the MFDs of the erbium-doped optical fiber and the fiber coupler are matched and the lowest loss is achieved is very short.

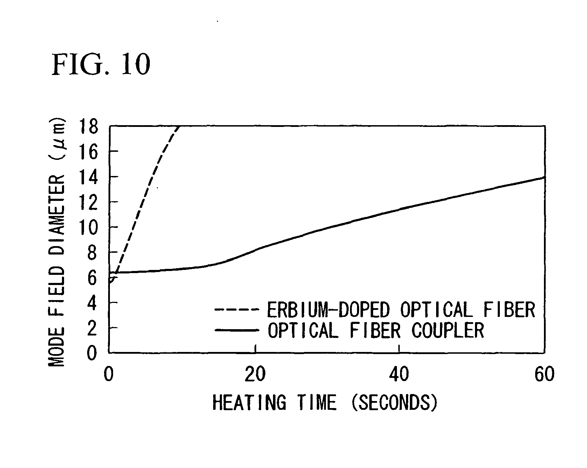

Here, FIG. 10 is a diagram illustrating the change in the MFD of an optical fiber coupler and an erbium-doped optical fiber with respect to heating time.

FIG. 10 indicates that the MFDs of the erbium-doped optical fiber and the fiber coupler are matched and the lowest loss is achieved before the fusion splicing is completed. Thus, if the fusion splicing is stopped at the point in time when the MFDs is matched, a splicing having a sufficient strength for practical use cannot be obtained whereas low splice loss is achieved.

Furthermore, in order to enhance the light amplification characteristic of an erbium-doped optical fiber, it is required to dope aluminum, i.e., one type of dopant, into the core at a high concentration. The doping of aluminum at a high concentration will cause an increase in the diffusion coefficient of the dopant. Accordingly, as the light amplification characteristic of the erbium-doped optical fiber is enhanced, it becomes more difficult to improve splicing strength between the erbium-doped optical fiber and the optical fiber coupler. For the reasons mentioned above, there is a need for an improved optical fiber coupler in order to achieve both an improvement in the amplification characteristic of an erbium-doped optical fiber and an improvement in splicing strength between the erbium-doped optical fiber and the optical fiber coupler.

Upon splicing an erbium-doped optical fiber and an optical fiber coupler, in order to achieve both low loss and sufficient splicing strength for practical use, the diffusion coefficient of the optical fiber included in the optical fiber coupler should be increased such that the heating time until the MFDs of an erbium-doped optical fiber and an optical fiber coupler are matched becomes sufficiently long. As a method for increasing the diffusion coefficient of the optical fiber included in the optical fiber coupler, a method of doping fluorine into a cladding that is described in a known document (A. Wada, T. Sakai, D. Tanaka, T. Nozawa and R. Yamauchi, OAA 1991, FD3, 1991, "High-Efficiency Erbium-Doped Fiber Amplifier using Mode Field Diameter Adjusting Technique") can be applied to an optical fiber included in the optical fiber coupler. However, the effect of increasing the diffusion coefficient will be limited if the amount of doped fluorine is small.

When the amount of doped fluorine is large, the relative refractive index difference between the core and the cladding will significantly change, which results in a change in the transmission characteristics. In addition, splicing with low splice loss cannot be achieved by simply increasing the diffusion coefficient of the optical fiber included in the optical fiber coupler to a value larger than the diffusion coefficient of an erbium-doped optical fiber since the MFDs of the optical fiber coupler and the erbium-doped optical fiber will not be matched by a change in the heating time.

JP09236721 discloses an optical fibre comprising a core, inner cladding and an outer cladding. The core has a Ge concentration of 200% of that of the inner cladding. The inner cladding is said to have a diffusion constant of the inner cladding larger than that of the outer cladding upon heating.

DISCLOSURE OF THE INVENTION

The present invention was conceived in view of the above-mentioned background, and an object thereof is to provide an optical fiber that can be fusion-spliced with another optical fiber having a different mode field diameter (MFD) with low splice loss and a sufficient splicing strength, an optical fiber coupler, erbium-doped optical fiber amplifier, and an optical waveguide using the same.

In order to solve the above-identified problems, the present invention provides the following:

The present invention is an optical fiber, including: a core that is provided at a center, the core being made of silica glass containing at least germanium; an inner cladding having a large diffusion coefficient, the inner cladding being provided concentric to the core; and an outer cladding having a small diffusion coefficient, the outer cladding being provided around the inner cladding, in which the inner cladding contains germanium, and a concentration of germanium in the core is about 200% or more of a concentration of germanium in the inner cladding.

In the optical fiber of the present invention, the inner cladding is made of silica glass containing germanium, phosphorus, and fluorine, and the outer cladding is made of silica glass.

In the optical fiber of the present invention, a diameter of the inner cladding is between 10 $\mu$m and 40 $\mu$m.

In the optical fiber of the present invention, a concentration of the germanium is between 0.2 and 1.5% by weight, a concentration of phosphorus is between 0.5 and 1.5% by weight, and a concentration of fluorine is between 0.1 and 1.0% by weight in the inner cladding.

In the optical fiber of the present invention, an outer diameter of the optical fiber is between 70 $\mu$m and 90 $\mu$m.

In the optical fiber of the present invention, two stress-applying parts are symmetrically disposed with respect to the core within the cladding around the core.

The present invention is an optical fiber coupler fabricated using the optical fiber mentioned above.

The present invention is an erbium-doped optical fiber amplifier fabricated using the optical fiber mentioned above.

The present invention is an optical waveguide fabricated using the optical fiber mentioned above as a pigtail fiber.


BRIEF DESCRIPTION OF THE DRAWINGS

FIG. 1 is a schematic diagram illustrating a portion of an erbium-doped optical fiber amplifier.
FIG. 2 is a diagram illustrating refractive index profiles of an optical fiber.
FIG. 3 is a diagram illustrating the change of the MFDs with respect to heating time when fusion-splicing an erbium-doped optical fiber and the optical fiber of the present invention or a conventional high NA optical fiber.
FIG. 4 is a diagram illustrating the change in the MFDs with respect to heating time of optical fibers.
FIG. 5 is a cross-sectional view of a PANDA polarization maintaining optical fiber.
FIG. 6 is a schematic diagram of a tap coupler.
FIG. 7 is a schematic cross-sectional view of a package of an erbium-doped optical fiber amplifier.
FIG. 8 is a schematic diagram illustrating one example of the constitution of an erbium-doped optical fiber amplifier.
FIG. 9 is a diagram illustrating the change in the MFDs with respect to heating time of an optical fiber coupler and a single-mode optical fiber.
FIG. 10 is a diagram illustrating the change in the MFDs with respect to heating time of an optical fiber coupler and an erbium-doped optical fiber.


BEST MODE FOR CARRYING OUT THE INVENTION

The optical fiber of the present invention is an optical fiber including a core that is provided at a center, the core being made of silica glass containing at least germanium; an inner cladding having a large diffusion coefficient, the inner cladding being provided around the core and concentric to the core, and an outer cladding having a small diffusion coefficient, the outer cladding being provided around the inner cladding, in which the inner cladding contains germanium, and a concentration of germanium in the core is about 200% or more of a concentration of germanium in the inner cladding.

By constructing an optical fiber having such a structure, it is possible to modify the manner in which the MFD of the optical fiber changes with respect to heating time of the spliced portion after fusion splicing. Specifically, in the optical fiber of the present invention, the MFD rapidly increases in an early stage of the heating, and the speed of enlargement of the MFD gradually slows down in the middle and end stages. Such a phenomenon is observed because germanium doped in the core diffuses to the cladding when the heating is started, and the MFD rapidly increases. The speed of migration of germanium is relatively large in an early stage of the heating since germanium diffuses in the inner cladding in which the diffusion coefficient is larger. In the middle and end stages of the heating, as the germanium reaches the outer cladding in which the diffusion coefficient is smaller, the speed of enlargement of the MFD is delayed and the rate of the enlargement gradually slows down since the speed of the diffusion of germanium into the outer cladding slows downs.

When the optical fiber of the present invention and an erbium-doped optical fiber are fusion-spliced and the spliced portion between these fibers is heated, the MFD of the optical fiber of the present invention is greater in an early stage of the heating. However, the speed of enlargement of the MFD of the optical fiber of the present invention gradually slows down in the middle and end stages of the heating, and eventually the MFD of the optical fiber of the present invention and the MFD of the erbium-doped optical fiber are matched. As a result, the splice loss between the optical fiber of the present invention and the erbium-doped optical fiber is reduced. In addition, the spliced portion between the optical fiber of the present invention and the erbium-doped optical fiber has a sufficient strength since the spliced portion has been heated long enough to reduce the splice loss.

Furthermore, since the MFD of the optical fiber of the present invention rapidly enlarges in the early stage of the heating when the optical fiber of the present invention and a single-mode optical fiber are fusion-spliced, it is possible to match the MFD of the optical fiber of the present invention and the MFD of the single-mode optical fiber in a relatively short time. As a result, it is possible to prevent deterioration of the strength of the optical fiber caused by long heating since the time required for enlarging the MFD of the optical fiber of the present invention can be shortened. Accordingly, fusion splicing having both a sufficient splicing strength and low loss is realized.

Preferably, the inner cladding of the optical fiber of the present invention is made of silica glass containing germanium (Ge), phosphorus (P), and fluorine (F), and the outer cladding is made from silica ($SiO_2$). It should be noted, however, that silicon tetrachloride ($SiCl_4$) may be used as a starting material for forming the outer cladding, and a small amount of chlorine is contained as a impurity in the outer cladding in such a case, which does not cause any particular problem. By constructing an optical fiber having such a structure, the diffusion rate of germanium doped in the core into the inner cladding will be relatively increased while the diffusion rate of germanium into the outer cladding will be relatively reduced. By doping three elements, i.e., germanium, phosphorus, and fluorine, in the inner cladding, it is possible to increase the diffusion rate of the dopants compared to an optical fiber in which only fluorine is doped.

The diameter of the core of the optical fiber of the present invention is preferably 9 $\mu$m or smaller.

Furthermore, the diameter of the inner cladding of the optical fiber of the present invention is preferably between 10 $\mu$m and 40 $\mu$m, and is more preferably between 15 $\mu$m and 25 $\mu$m.

If the diameter of the inner cladding is smaller than 10 $\mu$m, the effect of inhibiting the enlargement of the MFD will occur in an early stage of the heating, and the splice loss will reach the lowest value before a sufficient splicing strength is obtained when fusion-splicing the optical fiber of the present invention and an erbium-doped optical fiber. In contrast, if the diameter of the inner cladding exceeds 40 $\mu$m, when fusion-splicing the optical fiber of the present invention and a single-mode optical fiber, the MFD of the optical fiber of the present invention and the MFD of the single-mode optical fiber will be matched before the effect of inhibiting the enlargement of the MFD is obtained by heating the optical fiber of the present invention. As a result, the splice loss will reach the lowest value before a sufficient splicing strength is achieved.

By setting the diameter of the inner cladding of the optical fiber of the present invention to the above-mentioned range, the optical fiber of the present invention can be spliced with a single-mode optical fiber or an erbium-doped optical fiber with low loss and a sufficient splicing strength.

When fabricating an optical fiber coupler, two optical fibers are arranged in parallel, and portions of the fibers are fused by heating them, and the fused portion is elongated while heating. In this process, the MFDs of the two optical fibers will enlarge since a dopant contained in the core diffuses to cladding due to heating and elongation in the optical fibers. The rate of the enlargement of the MFD caused by heating and elongation is related to the coupling length (the length of the fused-elongated portion) of an optical fiber coupler, and it is possible to reduce the coupling length to a relatively small value if the speed of enlargement of the MFD is large. By reducing coupling length, it is possible to reduce the size of an optical fiber coupler. It should be noted, however, that if the speed of enlargement of the MFD is too large, the MFD of an end of the coupling portion (the Y-shaped portion of the optical fiber coupler) will be enlarged to an excessive degree. As a result, there will be a difference between the MFD in regions other than the coupling portion and the MFD of the end of the coupling portion in the optical fiber used in the optical fiber coupler.

If there is a large difference in the MFD in certain regions, a loss is incurred when light propagates through such regions, which results in an excessive loss in the optical fiber coupler. In order to obtain an excellent optical fiber coupler with a reduced size and low excess loss, it is required to use an optical fiber in which the speed of enlargement of the MFD is large during heating and elongation while the MFD does not enlarge to an excessive degree when heating and elongation is completed.

According to the optical fiber of the present invention, by setting the diameter of the inner cladding to values in the above-mentioned range, it is possible to obtain an excellent optical fiber coupler with a reduced size and low excess loss. In addition, the optical fiber coupler can be fusion-spliced with a single-mode optical fiber or an erbium-doped optical fiber with low loss and a sufficient splicing strength.

In the optical fiber of the present invention, the concentration of germanium in the core is between 3.0 and 21.0% by weight, and the concentration of fluorine is between 0 and 1.0% by weight.

Preferably, the concentration of germanium is between 0.2 and 1.5% by weight, the concentration of phosphorus is between 0.5 and 1.5% by weight, and the concentration of fluorine is between 0.1 and 1.0% by weight in inner cladding. More preferably, the concentration of germanium is between 0.8 and 1.2% by weight, the concentration of phosphorus is between 0.8 and 1.2% by weight, and the concentration of fluorine is between 0.3 and 0.7% by weight in the inner cladding.

The effect of inhibiting the enlargement of the MFD that is achieved by heating the optical fiber of the present invention is related to the diffusion rates of dopants, i.e., germanium, phosphorus, and fluorine in the inner cladding, and consequently is related to the concentrations of these dopants in the inner cladding. By setting the concentrations of dopants in the inner cladding of the optical fiber of the present invention to the above-mentioned ranges, the optical fiber of the present invention can be spliced with a single-mode optical fiber or an erbium-doped optical fiber with low loss and a sufficient splicing strength.

If the concentrations of dopants, i.e., germanium, phosphorus, and fluorine, in the inner cladding are smaller than the lower limits described above, the diffusion rates of dopants in the inner cladding will be limited, and the splice loss will reach the lowest value before a sufficient splicing strength is achieved when fusion-splicing the optical fiber of the present invention and an erbium-doped optical fiber. In contrast, if the concentrations of dopants, i.e., germanium, phosphorus, and fluorine, in the inner cladding exceeds the upper limits described above, the MFD of the optical fiber of the present invention and the MFD of a single-mode optical fiber will be matched before the effect of inhibiting the enlargement of the MFD is obtained that is achieved by heating the optical fiber of the present invention. As a result, the splice loss will reach the lowest value before a sufficient splicing strength is achieved.

In addition, the outer diameter of the optical fiber of the present invention is preferably between 70 $\mu$m and 90 $\mu$m, and is more preferably between 75 $\mu$m and 85 $\mu$m.

In optical components employing an optical fiber, such as an erbium-doped optical fiber amplifier, the size reduction of the components has been demanded. In order to reduce the size of such optical components, it is required to reduce the outer diameter of an optical fiber below the conventional outer diameter of 125 $\mu$m so that an allowable bending radius of the optical fiber is reduced and the fiber is compactly encased. According to the optical fiber of the present invention, by setting the outer diameter of the optical fiber to values in the above-mentioned range, it is possible to obtain an excellent optical component with a reduced size and a low bending loss. In addition, the optical component can be fusion-spliced with a single-mode optical fiber or an erbium-doped optical fiber with low loss and a sufficient splicing strength.

Furthermore, it is possible to reduce the size of a fused and elongated type optical fiber coupler by employing the optical fiber of the present invention having an outer diameter between 70 $\mu$m and 90 $\mu$m. The reduction in the size of a fused and elongated type optical fiber coupler is achievable by reducing the length of the coupling length (the length of the fused-elongated portion) of the coupler. Since the optical fiber of the present invention has a smaller outer diameter of between 70 $\mu$m and 90 $\mu$m than a conventional optical fiber having an outer diameter of 125 $\mu$m, it is possible to reduce the coupling length for obtaining mode coupling to a value smaller than the conventional optical fiber. Thus, it is possible to reduce the size of the optical fiber coupler.

Furthermore, the optical fiber of the present invention is preferably a polarization maintaining optical fiber that has two stress-applying parts that are symmetrically disposed with respect to the core within the cladding around the core.

The polarization interleave multiplexing is one of the dense wavelength multiplexing techniques that meets the recent demands for communications. A polarization maintaining erbium-doped optical fiber amplifier can amplify signal light while maintaining the plane of polarization, and such an amplifier is essential for the polarization interleave multiplexing. Accordingly, an erbium-doped optical fiber, or an optical fiber coupler, or the like that is used as main components of such a polarization maintaining erbium-doped optical fiber amplifier should exhibit a polarization maintaining characteristic. It is known that polarization maintaining optical components can be obtained by fabricating fiber-type optical components using a polarization maintaining optical fiber, such as a PANDA optical fiber having two stress-applying parts that are symmetrically disposed with respect to the core within the cladding around the core or a so-called bow-tie optical fiber. In addition, in a polarization maintaining erbium-doped optical fiber amplifier, a splicing with low loss and a sufficient splicing strength is required when splicing respective components. For the above-described reasons, a polarization maintaining optical fiber is preferably used as the optical fiber of the present invention that is used in a polarization maintaining erbium-doped optical fiber amplifier.

Furthermore, the optical fiber coupler of the present invention is a fused and elongated type optical fiber coupler fabricated using the optical fiber of the present invention.

Since the optical fiber of the present invention can be spliced with a single-mode optical fiber or an erbium-doped optical fiber with low loss and a sufficient splicing strength, the optical fiber coupler of the present invention will be similarly an optical fiber coupler spliced with low loss and a sufficient splicing strength.

The erbium-doped optical fiber amplifier of the present invention is fabricated using the optical fiber of the present invention, and generally includes fiber-type optical components and non-fiber-type optical components.

In general, optical components used in an erbium-doped optical fiber amplifier have different MFDs. For this reason, in the erbium-doped optical fiber amplifier, it is essential to connect components having different MFDs with low loss and a sufficient splicing strength. In the erbium-doped optical fiber amplifier of the present invention, a splicing with low loss and a sufficient splicing strength can be realized, and as a result, the performance can be enhanced by inserting the optical fibers of the present invention between connectors of each of the components to connect them, rather than directly connecting the components.

An optical waveguide of the present invention is fabricated using the optical fiber of the present invention as a pigtail fiber, and is a fiber-type optical component in which two or more of different kinds of optical fibers or optical components are coupled.

In general, it is required to introduce light having a wavelength of 1550 nm from a single-mode optical fiber used for optical communications into an optical waveguide. However, the MFD of a single-mode optical fiber and the MFD of the optical waveguide are different. Accordingly, by using an optical waveguide in which the optical fiber of the present invention is used as a pigtail fiber, this optical waveguide and a single-mode optical fiber can be spliced with low loss and a sufficient splicing strength.

The present invention will now be described in detail using the examples. It should be understood, however, that the present invention is not limited to the particular examples described herein.

(Example 1)

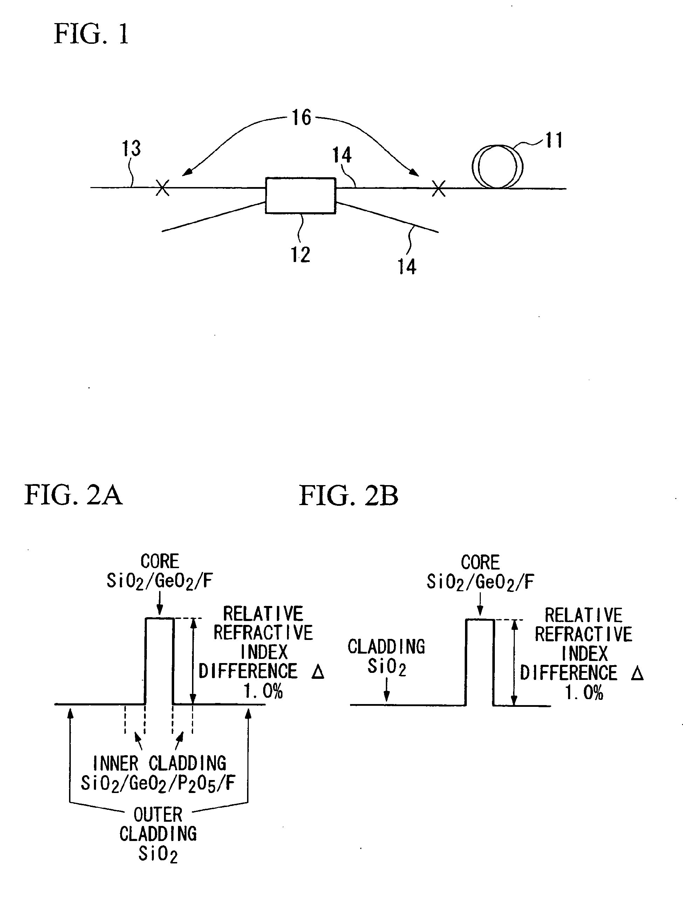

FIG. 1 is a schematic diagram illustrating a portion of an erbium-doped optical fiber amplifier.

The erbium-doped optical fiber amplifier of this example generally includes an erbium-doped optical fiber 11 and an optical fiber coupler 12 that is made by fusing and elongating optical fibers 14 and 14, and a single-mode optical fiber 13 that is spliced with the optical fiber 14 of the present invention used in the optical fiber coupler 12.

As shown in FIG. 1, the optical fiber coupler 12, and the erbium-doped optical fiber 11 and the single-mode optical fiber 13 are spliced together via fusion-spliced portions 16 in the erbium-doped optical fiber amplifier of this example. The splice loss and the splicing strength of the optical fiber coupler 12 are the same as the splice loss and the splicing strength of the optical fibers 14 and 14 used therein. The optical fiber of the present invention and a conventional high NA optical fiber were used as the optical fibers 14 and 14 employed in the optical fiber coupler 12, and an optical fiber coupler 12 employing two optical fibers of the present invention and another optical fiber coupler 12 employing two conventional optical fibers having a high numerical aperture were fabricated.

Here, FIG. 2 is a diagram illustrating refractive index profiles of optical fibers, in which FIG. 2(a) illustrates a refractive index profile of the optical fiber of the present invention, and FIG. 2(b) illustrates a refractive index profile of the conventional high NA optical fiber.

As shown in FIG. 2(a), the optical fiber of the present invention has a two-layered cladding structure in which the outer periphery of the core is surrounded by the cladding in which the refractive index is smaller than in the core, and the cladding includes an inner cladding and an outer cladding, each of which has a different composition.

The core was made of silica-based glass doped with germanium (Ge) and fluorine (F) ($SiO_2$ / $GeO_2$ / F), and the contents of the dopants were 12% by weight, and 0.2% by weight for germanium and fluorine, respectively.

The inner cladding was made of silica-based glass doped with germanium, phosphorus (P), and fluorine ($SiO_2$ / $GeO_2$ / $P_2O_5$ / F), and the contents of the dopants were about 1% by weight, about 1% by weight, and about 0.5% by weight for germanium, phosphorus and fluorine, respectively.

The outer cladding is made of silica-based glass ($SiO_2$).

There was little relative refractive index difference $\Delta$ between the inner cladding and the outer cladding, and the diameter of the inner cladding was 20 $\mu$m.

As shown in FIG. 2(b), the conventional high NA optical fiber is an optical fiber in which the outer periphery of the core is surrounded by the cladding in which the refractive index is smaller than in the core.

The core was made of silica-based glass doped with germanium and fluorine ($SiO_2$ / $GeO_2$ / F), and the contents of the dopants were 12% by weight, and 0.2% by weight for germanium and fluorine, respectively.

The cladding was made of pure silica-based glass ($SiO_2$).

Characteristics of each of the optical fibers used in the erbium-doped optical fiber amplifier shown in FIG. 1 are listed in Table 1.

EP 1 533 634 B1

Table 1

| Type of fiber | Relative RI difference Δ (%) | NA | Core diameter (μm) | MFD (@1550 nm) (μm) | Effective cut-off wavelength (μm) |
|---|---|---|---|---|---|
| Optical fiber of the present invention | 1.0 | 0.21 | 3.5 | 6.5 | 0.92 |
| Conventional high NA fiber | 1.0 | 0.21 | 3.5 | 6.5 | 0.92 |
| Single-mode optical fiber | 0.35 | 0.12 | 8.2 | 10 | 1.28 |
| Er-doped optical fiber | 1.22 | 0.23 | 2.9 | 5.5 | 0.88 |

Both the optical fiber of the present invention and the conventional high NA optical fiber, the relative refractive index difference between the core and the cladding Δ was 1.0%, the core diameter was 3.5 μm, the numerical aperture was 0.21, the effective cut-off wavelength was 0.92 μm, and the MFD with respect to light having a wavelength of 1550 nm was 6.5 μm.

To each of optical fiber couplers 12 that were made using either one of the two optical fibers, the erbium-doped optical fiber 11 and the single-mode optical fiber 13 were fusion-spliced, and the splice loss and the splicing strength of the fusion-spliced portion 16 were measured.

Procedures to measure the splice loss and the splicing strength of the fusion-spliced portion 16 will be explained.

After ends of each of the optical fibers to be spliced were flattened using a fiber cleaver or the like, the optical fibers were set to a conventional arc discharge-type fusion splicer. Then, the optical fibers were fusion-spliced in the presence of the arc, and the arc was maintained to conduct the heat treatment to further enlarge the MFDs. The arc current during the heat treatment was selected such that the temperature of the optical fibers was increased up to the glass softening point around between 1400 and 1600°C. During the heat treatment while fusion splicing and after splicing, the change in the propagation loss of the fusion-spliced portions 16 was measured to determine the minimum splice loss of the fusion-spliced portions 16 in which the propagation loss reached the lowest value. The change in propagation loss with respect to the length of time for which the arc was maintained was determined. The time to the minimum splice loss was defined as the arc maintaining time until the splice loss reached the lowest value. Then, 50 optical fibers were fusion-spliced using the time to the minimum splice loss for various combination of fibers, and tension test was carried out for the fusion-spliced portions 16. Upon conducting the tension test, the fusion-spliced samples were secured to a well-known tension tester, and the samples were pulled at a tension speed in which extension strain in one minute becomes 5% and tension force when the samples broke was recorded. The test was conducted for the 50 optical fibers, and the failure tension with which the cumulative failure probability becomes 50% was calculated. Here, the cumulative failure probability is defined as a probability of breakage when a certain failure tension or lower is applied. In this example, failure tension data of 50 optical fibers from the tension test were analyzed according to the method of Weibull analysis to determine the relationship between the cumulative failure probability and the failure tension. The results are listed in Table 2.

Table 2

| Fiber to be spliced (1) | Fiber to be spliced (2) | Min. splice loss (dB) | Time to min. splice loss (sec.) | Failure tension (GPa) when cumulative failure probability becomes 50% |
|---|---|---|---|---|
| Single-mode optical fiber | Optical fiber of the present invention | 0.1 | 10 | 2.4 |
| Single-mode optical fiber | Conventional high NA fiber | 0.2 | 30 | 2.0 |
| Er-doped optical fiber | Optical fiber of the present invention | 0.1 | 2 | 2.5 |
| Er-doped optical fiber | Conventional high NA fiber | 0.2 | 1 | 1.2 |

The results listed in Table 2 indicate that the minimum splice loss when spliced with a single-mode optical fiber was 0.1 dB for the optical fiber of the present invention is, and 0.2 dB for the conventional high NA optical fiber. The time to the minimum splice loss was 10 seconds for the optical fiber of the present invention, and 30 seconds for the conventional high NA optical fiber. This is because the MFD of the optical fiber of the present invention and the MFD of the single-mode optical fiber are matched in a relatively short time since the diffusion rate of the dopants of the core is faster in the optical fiber of the present invention.

In the tension test, the failure tension at which the cumulative failure probability becomes 50% was 2.4 GPa when the optical fiber of the present invention and a single-mode optical fiber were fusion-spliced, and was 2.0 GPa when the conventional high NA optical fiber and the single-mode optical fiber were fusion-spliced. The conventional high NA optical fiber in which the time to the minimum splice loss was longer was weaker. In addition, when comparing strength of a spliced portion between single-mode optical fibers that are considered to have a relatively large splicing strength, the failure tension of the spliced portion between the single-mode optical fibers were 2.5 GPa, which was almost the same as the splicing strength between the optical fiber of the present invention and a single-mode optical fiber. Thus, it was confirmed that the optical fiber of the present invention can be spliced with a single-mode optical fiber with low loss and a sufficient strength.

In contrast, the minimum splice loss when spliced with an erbium-doped optical fiber was 0.1 dB for the optical fiber of the present invention is, and was 0.2 dB for the conventional high NA optical fiber.

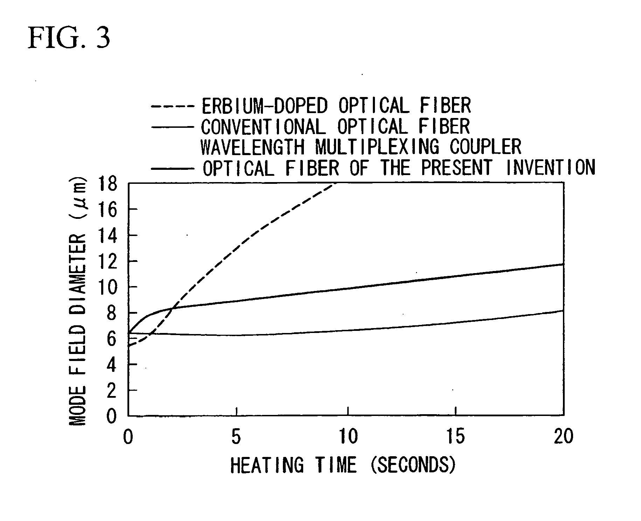

FIG. 3 is a diagram illustrating the change of the MFDs with respect to heating time when fusion-splicing an erbium-doped optical fiber and the optical fiber of the present invention or a conventional high NA optical fiber. The time to the minimum splice loss was 2 seconds for the optical fiber of the present invention, and was 1 second for the conventional high NA optical fiber. Since the diffusion rate of the dopant in the core of the erbium-doped optical fiber is sufficiently larger than that of the conventional high NA optical fiber, the MFDs of the fibers are matched in a short time. In contrast, since the diffusion rate of the dopant in the core of the optical fiber of the present invention is larger than the diffusion rate of the dopant in the core of the conventional high NA optical fiber in the early stage of the heating, it is possible to lengthen the time until the MFD of the optical fiber of the present invention is matched with the MFD of the erbium-doped optical fiber longer than the conventional high NA optical fiber. As a result, it is possible to lengthen the time to the minimum splice loss to a relatively large value.

In the tension test, the failure tension at which the cumulative failure probability becomes 50% was 2.5 GPa when the optical fiber of the present invention and an erbium-doped optical fiber were fusion-spliced, which was almost the same as the splicing strength of a spliced portion between single-mode optical fibers that is considered to have a relatively splicing strength. In contrast, the failure tension when fusion-splicing the conventional high NA optical fiber and the erbium-doped optical fiber was 1.2 GPa, meaning that spliced portion was very weak. This is because the sufficient splicing strength cannot be obtained since the time to the minimum splice loss in the combination of the conventional high NA optical fiber and the erbium-doped optical fiber is very short. For this reason, although the splicing between the conventional high NA optical fiber and the erbium-doped optical fiber has a low splice loss, the splicing cannot withstand practical use due to a weak splicing strength. In contrast, the optical fiber of the present invention could be spliced with the erbium-doped optical fiber with low splice loss and a sufficient splicing strength.

(Example 2)

Three types of optical fibers having a profile shown in FIG. 2(a) were provided, except that each of which has a different inner cladding diameter. The diameters of the inner cladding of the optical fibers were 10 $\mu$m, 20 $\mu$m, or 40 $\mu$m, respectively.

As shown in FIG. 2(a), the optical fiber of the present invention has a two-layered cladding structure in which the outer periphery of the core is surrounded by the cladding in which the refractive index is smaller than in the core, and the cladding includes an inner cladding and an outer cladding, each of which has a different composition.

The core was made of silica-based glass doped with germanium (Ge) and fluorine (F) ($SiO_2$ / $GeO_2$ / F), and the contents of the dopants were 12% by weight, and 0.2% by weight for germanium and fluorine, respectively.

The inner cladding was made of silica-based glass doped with germanium, phosphorus (P), and fluorine ($SiO_2$ / $GeO_2$ / $P_2O_5$ / F), and the contents of the dopants were about 1% by weight, about 1% by weight, and about 0.5% by weight for germanium, phosphorus and fluorine, respectively.

The outer cladding is made of silica-based glass ($SiO_2$).

There was little relative refractive index difference $\Delta$ between the inner cladding and the outer cladding.

All of the optical fibers were fabricated to have the same core structure as that of the optical fiber of the present invention in Example 1. The relative refractive index difference $\Delta$ of the core was 1.0%, the numerical aperture was 0.21, the core diameter was 3.5 $\mu$m, the MFD (@1550 nm) was 6.5 $\mu$m, and the effective cut-off wavelength was 0.92 $\mu$m.

Similar to Example 1, each of the optical fibers having different inner cladding diameters was fusion-spliced with a single-mode optical fiber or an erbium-doped optical fiber, and the splice loss and the splicing strength were measured. The measurement was carried out using the same procedures as Example 1. The results are listed in Table 3.

Table 3

| Fiber of present invention | the Fiber to be spliced | Min. splice loss (dB) | Time to min. splice loss (sec.) | Failure tension (GPa) when cumulative failure probability becomes 50% |
|---|---|---|---|---|
| Inner cladding of 10 $\mu$m | Single-mode optical fiber | 0.12 | 18 | 2.2 |
| Inner cladding of 20 $\mu$m | Single-mode optical fiber | 0.10 | 10 | 2.4 |
| Inner cladding of 40 $\mu$m | Single-mode optical fiber | 0.12 | 4.5 | 2.5 |
| Inner cladding of 10 $\mu$m | Er-doped optical fiber | 0.12 | 1.8 | 2.3 |
| Inner cladding of 20 $\mu$m | Er-doped optical fiber | 0.10 | 2.0 | 2.5 |
| Inner cladding of 40 $\mu$m | Er-doped optical fiber | 0.12 | 4.0 | 2.4 |

The results listed in Table 3 indicate that although the optical fiber having an inner cladding diameter of 20 $\mu$m exhibited the most favorable splice loss, the difference between the optical fibers having an inner cladding diameter of 10 $\mu$m or 40 $\mu$m was about 0.02 dB. All of the three optical fibers exhibited an excellent splicing strength. Thus, it was confirmed that the optical fiber of the present invention having a diameter of the inner cladding between 10 $\mu$m and 40 $\mu$m can be spliced with a single-mode optical fiber or an erbium-doped optical fiber with low loss and a sufficient strength.

(Comparative Example 1)

Two types of optical fibers having the same profile as optical fibers in Example 2 were provided, except that the inner cladding diameters were different from the optical fibers in Example 2. The diameters of the inner cladding of the optical fibers were 5 $\mu$m or 45 $\mu$m, respectively.

Similar to Example 1, each of the optical fibers having different inner cladding diameters was fusion-spliced with a single-mode optical fiber or an erbium-doped optical fiber, and the splice loss and the splicing strength were measured. The measurement was carried out using the same procedures as Example 1. The results are listed in Table 4.

Table 4

| Fiber of the present invention | Fiber to be spliced | Min. splice loss (dB) | Time to min. splice loss (sec.) | Failure tension (GPa) when cumulative failure probability becomes 50% |
|---|---|---|---|---|
| Inner cladding of 5 $\mu$m | Single-mode optical fiber | 0.18 | 25 | 2.1 |
| Inner cladding of 45 $\mu$m | Single-mode optical fiber | 0.18 | 1.5 | 2.0 |
| Inner cladding of 5 $\mu$m | Er-doped optical fiber | 0.15 | 1.2 | 1.8 |
| Inner cladding of 45 $\mu$m | Er-doped optical fiber | 0.15 | 5.0 | 2.4 |

The results listed in Table 4 indicate that some optical fibers exhibited higher splice loss than the optical fibers in Example 2 and had a splicing strength below 2.0 GPa.

Thus, it was confirmed that an optical fiber having an inner cladding diameter out of the range between 10 $\mu$m and 40 $\mu$m exhibited inferior splicing characteristic to the optical fiber of the present invention when spliced with a single-mode optical fiber or an erbium-doped optical fiber.

(Example 3)

Three types of optical fibers A, B, and C having a profile shown in FIG. 2(a) were provided, each of which has a different dopant content.

The inner cladding of the optical fiber A was made of silica-based glass doped with germanium, phosphorus (P), and fluorine ($SiO_2$ / $GeO_2$ / $P_2O_5$ / F), and the contents of the dopants were 0.2% by weight, 0.5% by weight, and 0.1 % by weight for germanium, phosphorus and fluorine, respectively.

The inner cladding of the optical fiber B was made of silica-based glass doped with germanium, phosphorus (P), and fluorine ($SiO_2$ / $GeO_2$ / $P_2O_5$ / F), and the contents of the dopants were about 1% by weight, about 1% by weight, and about 0.5% by weight for germanium, phosphorus and fluorine, respectively.

The inner cladding of the optical fiber C was made of silica-based glass doped with germanium, phosphorus (P), and fluorine ($SiO_2$ / $GeO_2$ / $P_2O_5$ / F), and the contents of the dopants were 1.5% by weight, 1.5% by weight, and 1.0% by weight for germanium, phosphorus and fluorine, respectively.

Parameters other than the dopant concentration in the inner cladding were the same as those of the optical fibers in Example 1.

In other words, the core was made of silica-based glass doped with germanium (Ge) and fluorine (F) ($SiO_2$ / $GeO_2$ / F), and the contents of the dopants were 12% by weight, and 0.2% by weight for germanium and fluorine, respectively.

The outer cladding is made of silica-based glass ($SiO_2$).

There was little relative refractive index difference $\Delta$ between the inner cladding and the outer cladding.

All of the structural parameters of the core were the same as the structural parameters of the optical fiber of the present invention listed in Table 1. The relative refractive index difference $\Delta$ of the core was 1.0%, the numerical aperture was 0.21, the core diameter was 3.5 $\mu$m, the MFD (@1550 nm) was 6.5 $\mu$m, and the effective cut-off wavelength was 0.92 $\mu$m. The diameter of the inner cladding was 20 $\mu$m.

Similar to Example 1, each of the optical fibers having different dopant contents in the inner cladding was fusion-spliced with a single-mode optical fiber or an erbium-doped optical fiber, and the splice loss and the splicing strength were measured. The measurement was carried out using the same procedures as Example 1. The results are listed in Table 5.

Table 5

| Fiber of the present invention | Fiber to be spliced | Min. splice loss (dB) | Time to mm. splice loss (sec.) | Failure tension (GPa) when cumulative failure probability becomes 50% |
|---|---|---|---|---|
| Fiber A (low conc.) | Single-mode optical fiber | 0.11 | 16 | 2.3 |
| Fiber B (middle conc.) | Single-mode optical fiber | 0.10 | 10 | 2.4 |
| Fiber C (high conc.) | Single-mode optical fiber | 0.12 | 5.0 | 2.4 |
| Fiber A (low conc.) | Er-doped optical fiber | 0.12 | 1.7 | 2.1 |
| Fiber B (middle conc.) | Er-doped optical fiber | 0.10 | 2.0 | 2.5 |
| Fiber C (high conc.) | Er-doped optical fiber | 0.12 | 2.5 | 2.5 |

The results listed in Table 5 indicate although the optical fiber B exhibited the most favorable splice loss, the difference between the optical fiber A or C was about 0.02 dB. All three fibers had an excellent splicing strength.

Thus, it was confirmed that the optical fiber of the present invention in which the concentration of germanium is between 3.0 and 21.0% by weight in the core, and the concentration of fluorine is between 0 and 1.0% by weight in the core, the concentration of germanium is between 0.2 and 1.5% by weight in the inner cladding, and the concentration of phosphorus is between 0.5 and 1.5% by weight in the inner cladding, and the concentration of fluorine is between 0.1 and 1.0% by weight in the inner cladding can be spliced with a single-mode optical fiber or an erbium-doped optical fiber with low loss and a sufficient strength.

(Comparative Example 2)

Two types of optical fibers D and E having the same profile as optical fibers in Example 3 were provided, except that the dopant concentrations of the inner cladding were different from the optical fibers in Example 3.

The inner cladding of the optical fiber D was made of silica-based glass doped with phosphorus (P) and fluorine ($SiO_2$ / $P_2O_5$ / F), and the contents of the dopants were 0.2% by weight and 0.05% by weight for phosphorus and fluorine, respectively.

The inner cladding of the optical fiber E was made of silica-based glass doped with germanium, phosphorus (P), and fluorine ($SiO_2$ /$GeO_2$ /$P_2O_5$ / F), and the contents of the dopants were about 2.0% by weight, about 2.0% by weight, and about 1.2% by weight for germanium, phosphorus and fluorine, respectively.

Similar to Example 1, each of the optical fibers having different dopant contents in the inner cladding was fusion-spliced with a single-mode optical fiber or an erbium-doped optical fiber, and the splice loss and the splicing strength were measured. The measurement was carried out using the same procedures as Example 1. The results are listed in Table 6.

Table 6

| Fiber to be spliced (1) | Fiber to be spliced (2) | Min. splice loss (dB) | Time to min. splice loss (sec.) | Failure tension (GPa) when cumulative failure probability becomes 50% |
|---|---|---|---|---|
| Fiber D (lowest conc.) | Single-mode optical fiber | 0.14 | 20 | 2.2 |
| Fiber E (highest conc.) | Single-mode optical fiber | 0.22 | 1.5 | 1.9 |
| Fiber D (lowest conc.) | Er-doped optical fiber | 0.14 | 1.5 | 1.9 |
| Fiber E (highest conc.) | Er-doped optical fiber | 0.15 | 3.5 | 2.4 |

The results listed in Table 6 indicate that some optical fibers exhibited higher splice loss than the optical fibers in Example 3 and had a splicing strength below 2.0 GPa.

Thus, it was confirmed that an optical fiber in which the concentration of germanium is 12% by weight in the core, and the concentration of fluorine is 0.2% by weight in the core, and the concentration of germanium is out of the range between 0.2 and 1.5% by weight in the inner cladding, the concentration of phosphorus is out of the range between 0.5 and 1.5% by weight in the inner cladding, and the concentration of fluorine is out of the range between 0.1 and 1.0% by weight in the inner cladding exhibited inferior splicing characteristics when spliced with a single-mode optical fiber or an erbium-doped optical compared to the optical fiber of the present invention.

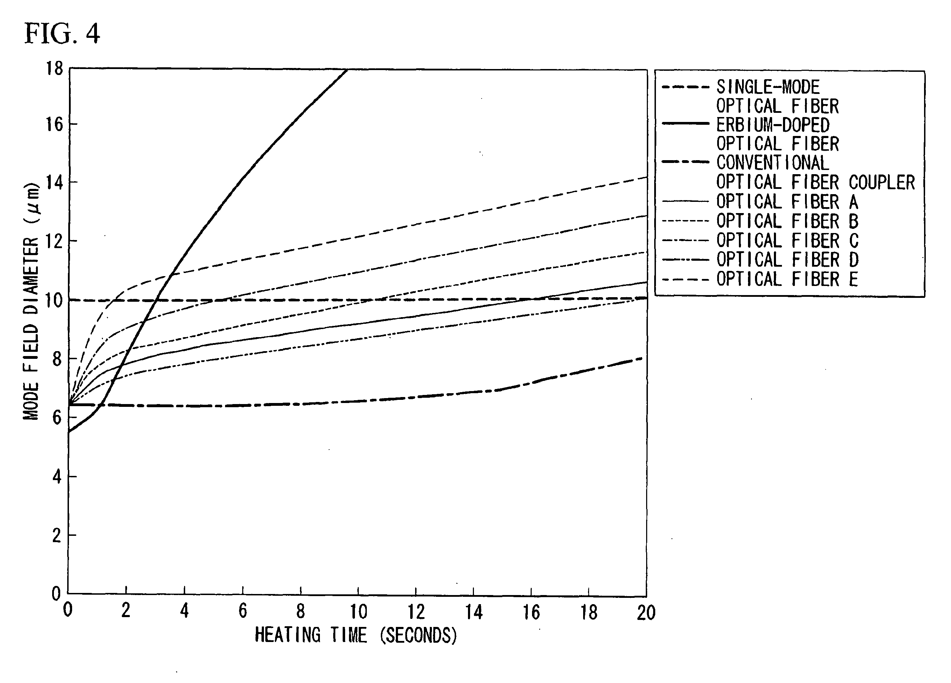

Furthermore, the change in the mode field diameter (MFD) with respect to heating time of the optical fibers A to E mentioned above is shown in FIG. 4.

It was confirmed from FIG. 4 that the optical fibers A, B, and C which are the optical fibers of the present invention, can be fusion-spliced with single-mode optical fiber or an erbium-doped optical fiber with low loss and a sufficient strength.

(Example 4)

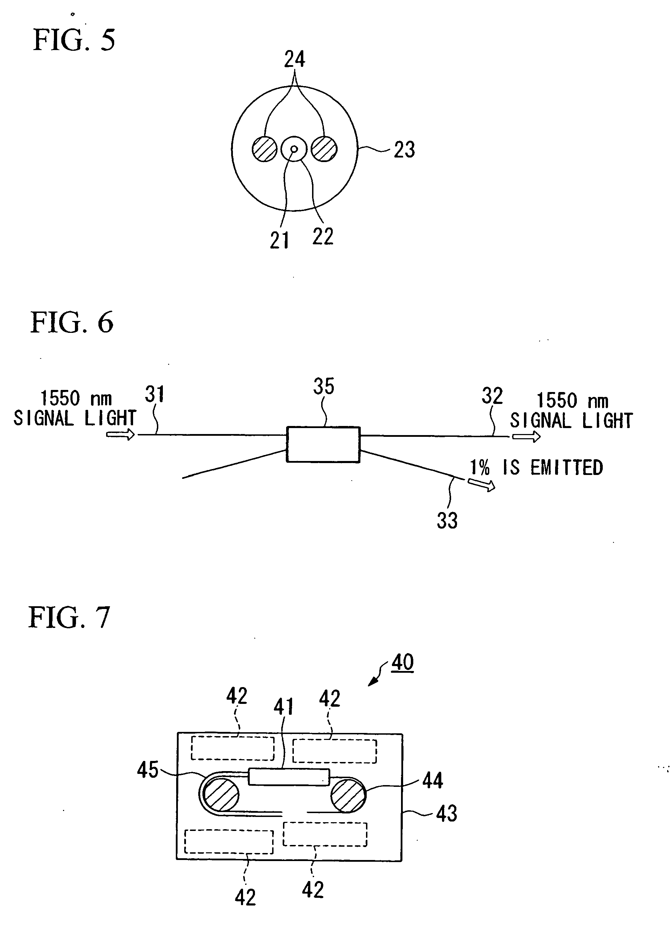

Three types of PANDA polarization maintaining optical fibers having a profile shown in FIG. 5 were provided, except that each of which has a different inner cladding diameter.

The PANDA polarization maintaining optical fibers were optical fibers, each of which includes a core 21 with a diameter of 3.5 $\mu$m, an inner cladding 22, an outer cladding 23 having a diameter of 125 $\mu$m, and two stress-applying parts 24 and 24 that are symmetrically disposed with respect to the core 21.

The diameters of the inner cladding 22 of the optical fibers were 10 $\mu$m, 20 $\mu$m, or 40 $\mu$m, respectively.

The core 21 was made of silica-based glass doped with germanium (Ge) and fluorine (F) ($SiO_2$ / $GeO_2$ / F), and the contents of the dopants were 12% by weight, and 0.2% by weight for germanium and fluorine, respectively.

The inner cladding 22 was made of silica-based glass doped with germanium, phosphorus (P), and fluorine ($SiO_2$ / $GeO_2$ / $P_2O_5$ / F), and the contents of the dopants were about 1% by weight, about 1% by weight, and about 0.5% by weight for germanium, phosphorus and fluorine, respectively.

The outer cladding 23 is made of silica-based glass ($SiO_2$).

Two stress-applying parts 24 and 24 were made of silica-based glass doped with boron ($SiO_2 / B_2O_3$).

There was little relative refractive index difference $\Delta$ between the inner cladding 22 and the outer cladding 23.

The relative refractive index difference $\Delta$ of the core was 1.0%, the MFD (@1550 nm) was 6.5 $\mu$m, and the effective cut-off wavelength was 0.92 $\mu$m.

Similar to Example 1, each of the PANDA polarization maintaining optical fibers having different inner cladding diameters was fusion-spliced with a single-mode optical fiber or an erbium-doped optical fiber, and the splice loss and the splicing strength were measured. The measurement was carried out using the same procedures as Example 1. The results are listed in Table 7.

Table 7

| PANDA polarization maintaining fiber | Fiber to be spliced | Min. splice loss (dB) | Time to min. splice loss (sec.) | Failure tension (GPa) when cumulative failure probability becomes 50% |
|---|---|---|---|---|
| Inner cladding of 10 $\mu$m | Single-mode optical fiber | 0.12 | 18 | 2.2 |
| Inner cladding of 20 $\mu$m | Single-mode optical fiber | 0.10 | 10 | 2.4 |
| Inner cladding of 40 $\mu$m | Single-mode optical fiber | 0.12 | 4.5 | 2.5 |
| Inner cladding of 10 $\mu$m | Er-doped optical fiber | 0.12 | 1.8 | 2.3 |
| Inner cladding of 20 $\mu$m | Er-doped optical fiber | 0.10 | 2.0 | 2.5 |
| Inner cladding of 40 $\mu$m | Er-doped optical fiber | 0.12 | 4.0 | 2.4 |

The results listed in Table 7 indicate that although the optical fiber having a diameter of the inner cladding 22 of 20 $\mu$m exhibited the most favorable splice loss, the difference between the optical fibers having a diameter of the inner cladding 22 of 10 $\mu$m or 40 $\mu$m was about 0.02 dB. All of the three optical fibers exhibited an excellent splicing strength. Thus, it was confirmed that the PANDA polarization maintaining optical fiber having a diameter of the inner cladding between 10 $\mu$m and 40 $\mu$m can be spliced with a single-mode optical fiber or an erbium-doped optical fiber with low loss and a sufficient strength.

(Comparative Example 3)

Two types of optical fibers having the same profile as the PANDA optical fibers in Example 4 were provided, except that the inner cladding diameters were varied from the optical fibers in Example 4. The diameters of the inner cladding of the optical fibers were 5 $\mu$m or 45 $\mu$m, respectively.

Similar to Example 1, each of the PANDA polarization maintaining optical fibers having different inner cladding diameters was fusion-spliced with a single-mode optical fiber or an erbium-doped optical fiber, and the splice loss and the splicing strength were measured. The measurement was carried out using the same procedures as Example 1. The results are listed in Table 8.

Table 8

| PANDA polarization maintaining fiber | Fiber to be spliced | Min. splice loss (dB) | Time to min. splice loss (sec.) | Failure tension (GPa) when cumulative Failure probability becomes 50% |
|---|---|---|---|---|
| Inner cladding of 5 $\mu$m | Single-mode optical fiber | 0.18 | 25 | 2.1 |
| Inner cladding of 45 $\mu$m | Single-mode optical fiber | 0.18 | 1.5 | 2.0 |

(continued)

| PANDA polarization maintaining fiber | Fiber to be spliced | Min. splice loss (dB) | Time to min. splice loss (sec.) | Failure tension (GPa) when cumulative Failure probability becomes 50% |
|---|---|---|---|---|
| Inner cladding of 5 $\mu$m | Er-doped optical fiber | 0.15 | 1.2 | 1.8 |
| Inner cladding of 45 $\mu$m | Er-doped optical fiber | 0.15 | 5.0 | 2.4 |

The results listed in Table 8 indicate that some optical fibers exhibited higher splice loss than the optical fibers in Example 4 and had a splicing strength below 2.0 GPa.

Thus, it was confirmed that a PANDA polarization maintaining optical fiber having an inner cladding diameter out of the range between 10 $\mu$m and 40 $\mu$m exhibited inferior splicing characteristic to the PANDA polarization maintaining optical fiber of the present invention when spliced with a single-mode optical fiber or an erbium-doped optical fiber.

(Example 5)

Three types of PANDA polarization maintaining optical fibers F, G and H having a profile shown in FIG. 5 were provided, each of which has a different dopant content.

The inner cladding 22 of the optical fiber F was made of silica-based glass doped with germanium, phosphorus (P), and fluorine ($SiO_2$ / $GeO_2$ / $P_2O_5$ / F), and the contents of the dopants were 0.2% by weight, 0.5% by weight, and 0.1% by weight for germanium, phosphorus and fluorine, respectively.

The inner cladding 22 of the optical fiber G was made of silica-based glass doped with germanium, phosphorus (P), and fluorine ($SiO_2$ / $GeO_2$ / $P_2O_5$ / F), and the contents of the dopants were about 1% by weight, about 1% by weight, and about 0.5% by weight for germanium, phosphorus and fluorine, respectively.

The inner cladding 22 of the optical fiber H was made of silica-based glass doped with germanium, phosphorus (P), and fluorine ($SiO_2$ / $GeO_2$ / $P_2O_5$ / F), and the contents of the dopants were 1.5% by weight, 1.5% by weight, and 1.0% by weight for germanium, phosphorus and fluorine, respectively.

Parameters other than the dopant concentration in the inner cladding 22 and the presence of the stress-applying parts 24 and 24 were the same as the optical fibers in Example 1.

In other words, the core was made of silica-based glass doped with germanium (Ge) and fluorine (F) ($SiO_2$ / $GeO_2$ / F), and the contents of the dopants were 12% by weight, and 0.2% by weight for germanium and fluorine, respectively.

The outer cladding 23 is made of silica-based glass ($SiO_2$).

There was little relative refractive index difference $\Delta$ between the inner cladding 22 and the outer cladding 23.

The relative refractive index difference $\Delta$ of the core 21 was 1.0%, the MFD (@1550 nm) was 6.5 $\mu$m, and the effective cut-off wavelength was 0.92 $\mu$m. The diameter of the inner cladding 22 was 20 $\mu$m.

Similar to Example 1, each of the PANDA polarization maintaining optical fibers having different dopant contents in the inner cladding was fusion-spliced with a single-mode optical fiber or an erbium-doped optical fiber, and the splice loss and the splicing strength were measured. The measurement was carried out using the same procedures as Example 1. The results are listed in Table 9.

Table 9

| PANDA polarization maintaining fiber | Fiber to be spliced | Min. splice loss (dB) | Time to min. splice loss (sec.) | Failure tension (GPa) when cumulative failure probability becomes 50% |
|---|---|---|---|---|
| Fiber F (low conc.) | Single-mode optical fiber | 0.11 | 16 | 2.3 |
| Fiber G (middle conc.) | Single-mode optical fiber | 0.10 | 10 | 2.4 |
| Fiber H (high conc.) | Single-mode optical fiber | 0.12 | 5.0 | 2.4 |

(continued)

| PANDA polarization maintaining fiber | Fiber to be spliced | Min. splice loss (dB) | Time to min. splice loss (sec.) | Failure tension (GPa) when cumulative failure probability becomes 50% |
|---|---|---|---|---|
| Fiber F (low conc.) | Er-doped optical fiber | 0.12 | 1.7 | 2.1 |
| Fiber G (middle conc.) | Er-doped optical fiber | 0.10 | 2.0 | 2.5 |
| Fiber H (high conc.) | Er-doped optical fiber | 0.12 | 2.5 | 2.5 |

The results listed in Table 9 indicate although the optical fiber G exhibited the most favorable splice loss, the difference between the optical fiber F or H was about 0.02 dB. All three fibers had an excellent splicing strength.

Thus, it was confirmed that the PANDA polarization maintaining optical fiber of the present invention in which the concentration of germanium is between 3.0 and 21.0% by weight in the core 21, and the concentration of fluorine is between 0 and 1.0% by weight in the core 21, the concentration of germanium is between 0.2 and 1.5% by weight in the inner cladding, the concentration of phosphorus is between 0.5 and 1.5% by weight in the inner cladding, and the concentration of fluorine is between 0.1 and 1.0% by weight in the inner cladding can be spliced with a single-mode optical fiber or an erbium-doped optical fiber with low loss and a sufficient strength.

(Comparative Example 4)

Two types of PANDA polarization maintaining optical fibers I and J having the same profile as optical fibers in Example 5 were provided, except that the dopant concentrations of the inner cladding 22 were varied from the optical fibers in Example 3.

The inner cladding of the optical fiber I was made of silica-based glass doped with phosphorus (P) and fluorine ($SiO_2$ / $P_2O_5$ / F), and the contents of the dopants were 0.2% by weight, and 0.05% by weight for phosphorus and fluorine, respectively.

The inner cladding of the optical fiber J was made of silica-based glass doped with germanium, phosphorus (P), and fluorine ($SiO_2$ / $GeO_2$ / $P_2O_5$ / F), and the contents of the dopants were about 2.0% by weight, about 2.0% by weight and about 1.2% by weight for germanium, phosphorus and fluorine, respectively.

Similar to Example 1, each of the PANDA polarization maintaining optical fibers having different dopant contents in the inner cladding 22 was fusion-spliced with a single-mode optical fiber or an erbium-doped optical fiber, and the splice loss and the splicing strength were measured. The measurement was carried out using the same procedures as Example 1. The results are listed in Table 10.

Table 10

| PANDA polarization maintaining fiber | Fiber to be spliced (2) | Min. splice loss (dB) | Time to min. splice loss (sec.) | Failure tension (GPa) when cumulative failure probability becomes 50% |
|---|---|---|---|---|
| Fiber I (lowest conc.) | Single-mode optical fiber | 0.14 | 20 | 2.2 |
| Fiber J (highest conc.) | Single-mode optical fiber | 0.22 | 1.5 | 1.9 |
| Fiber I (lowest conc.) | Er-doped optical fiber | 0.14 | 1.5 | 1.9 |
| Fiber J (highest conc.) | Er-doped optical fiber | 0.15 | 3.5 | 2.4 |

The results listed in Table 10 indicate that some optical fibers exhibited higher splice loss than the optical fibers in Example 5 and had a splicing strength below 2.0 GPa.

Thus, it was confirmed that a PANDA polarization maintaining optical fiber in which the concentration of germanium 12% by weight in the core 21 and the concentration of fluorine is 0.2% by weight in the core 21, and the concentration of germanium is out of the range between 0.2 and 1.5% by weight in the inner cladding 22, the concentration of phosphorus is out of the range between 0.5 and 1.5% by weight in the inner cladding 22, and the concentration of fluorine is out of the range between 0.1 and 1.0% by weight in the inner cladding 22 exhibited inferior splicing characteristics when spliced with a single-mode optical fiber or an erbium-doped optical compared to the optical fiber of the present invention.

(Example 6)

An optical power coupling/dividing coupler having the structure shown in FIG. 6 was fabricated.

This optical power coupling/dividing coupler is one type of optical fiber coupler, i.e., so-called "tap coupler," which is for extracting a very small amount of light for monitoring lines. This tap coupler was designed such that one percent of the power of signal light having a wavelength of 1550 nm is extracted.

In this optical power coupling/dividing coupler, when signal light having a wavelength of 1550 nm is incident to a first port 31, one percent of the optical power that is divided in the optical fiber coupler 35 is emitted from a third port 33 and the rest of the optical power is emitted from a second port 32.

This tap coupler was fabricated using an optical fiber of the present invention. The outer diameter of this optical fiber was 80 $\mu$m, which is smaller than the outer diameter of 125 $\mu$m of a conventional optical fiber. This optical fiber was an optical fiber that includes a core having a diameter of about 7.2 $\mu$m, an inner cladding having a diameter of 20 $\mu$m, and an outer cladding having a diameter of 80 $\mu$m.

The core was made of silica-based glass doped with germanium (Ge) and fluorine (F) ($SiO_2$ / $GeO_2$ / F), and the contents of the dopants were 6.3% by weight and 0.2% by weight for germanium and fluorine, respectively.

The inner cladding was made of silica-based glass doped with germanium, phosphorus (P), and fluorine ($SiO_2$ / $GeO_2$ / $P_2O_5$ / F), and the contents of the dopants were about 1% by weight, about 1% by weight, and about 0.5% by weight for germanium, phosphorus and fluorine, respectively.

The outer cladding is made of silica-based glass ($SiO_2$).

The relative refractive index difference $\Delta$ of the core was 0.54%, the MFD (@1550 nm) was 8.3 $\mu$m, and the effective cut-off wavelength was 1.34 $\mu$m.

The inner cladding and the outer cladding had almost the same refractive index.

Two such optical fibers were provided, arranged in parallel, and fused and elongated to fabricate a tap coupler that extracts one percent of the power of signal light having a wavelength of 1550 nm.

The coupling length of this tap coupler was 5 mm. Since the optical fiber of the present invention included the inner cladding and had an outer diameter or 80 $\mu$m, the coupling length could be reduced. As a result, the size of the tap coupler could be reduced.

(Comparative Example 5)

A tap coupler similar to the tap coupler in Example 6 was fabricated.

This tap coupler was fabricated using a conventional optical fiber. The optical fiber employed in this comparative example was an optical fiber that has an outer diameter of 125 $\mu$m, and includes a core having a diameter of about 7.2 $\mu$m and a cladding having a diameter of 125 $\mu$m.

The core was made of silica-based glass doped with germanium (Ge) and fluorine (F) ($SiO_2$ / $GeO_2$ / F), and the contents of the dopants were 6.3% by weight and 0.2% by weight for germanium and fluorine, respectively.

The cladding was made of pure silica-based glass ($SiO_2$).

The relative refractive index difference $\Delta$ of the core was 0.54%, the MFD (@1550 nm) was 8.3 $\mu$m, and the effective cut-off wavelength was 1.34 $\mu$m.

Two such optical fibers were provided, arranged in parallel, and fused and elongated to fabricate a tap coupler that extracts one percent of the power of signal light having a wavelength of 1550 nm.

The coupling length of this tap coupler was 14 mm. It was found that the coupling length was large and the size of the tap coupler using the conventional optical fiber could not be reduced sufficiently compared to the tap coupler of Example 6.

(Example 7)

An erbium-doped optical fiber amplifier 40 having the structure shown in FIG 7 was fabricated.

This erbium-doped optical fiber amplifier 40 includes a wavelength division multiplexing coupler (hereinafter abbreviated as "WDM coupler") 41 and other components 42 that are contained in a housing 43. The dimensions of the erbium-doped optical fiber amplifier 40 were height of 70 mm by width of 90 mm by depth of 12 mm.

Other parts 42 included an excitation 980-nm laser diode for excitation, an optical isolator, a tap coupler, and the like. In order to house a number of components, the excess length of the optical fiber of the WDM coupler 41 was wound about cylindrical members 44, each of which has a radius of 10 mm to save space.

The WDM coupler was fabricated using an optical fiber of the present invention. The outer diameter of this optical fiber 45 was 80 $\mu$m, which is smaller than the outer diameter of 125 $\mu$m of a conventional optical fiber. The optical fiber 45 is an optical fiber that includes a core having a diameter of about 3.1 $\mu$m, an inner cladding having a diameter of 20 $\mu$m, and an outer cladding having a diameter of 80 $\mu$m.

The core was made of silica-based glass doped with germanium (Ge) and fluorine (F) ($SiO_2$ / $GeO_2$ / F), and the contents of the dopants were 14% by weight and 0.2% by weight for germanium and fluorine, respectively.

The inner cladding was made of silica-based glass doped with germanium, phosphorus (P), and fluorine ($SiO_2$ / $GeO_2$ / $P_2O_5$ / F), and the contents of the dopants were about 1% by weight, about 1% by weight, and about 0.5% by weight for germanium, phosphorus and fluorine, respectively.

The outer cladding is made of silica-based glass ($SiO_2$).

The relative refractive index difference $\Delta$ of the core was 1.25%, the MFD (@1550 nm) was 6.0 $\mu$m, and the effective cut-off wavelength was 0.92 $\mu$m.

The inner cladding and the outer cladding had almost the same refractive index.

The bending loss of the optical fiber 45 when wound with a bending radius of 10 mm by 5 turns was 0.05 dB in a wavelength of 1.610 $\mu$m, and was less than 0.05 dB in wavelengths shorter than 1.610 $\mu$m, which was almost 0 dB.

Two of the optical fibers 45 were provided, arranged in parallel, and fused and elongated to fabricate the WDM coupler 41 that multiplexes/demultiplexes an excitation light having a wavelength of 980 nm and signal light having a wavelength of 1550 nm.

Since the WDM coupler 41 fabricated in the manner described above includes the optical fiber 45 having an outer diameter of 80 $\mu$m, it exhibits less strain due to bending than a WDM coupler including a conventional optical fiber having an outer a diameter of 125 $\mu$m. Thus, the WDM coupler of the present invention that employs the optical fiber 45 having an outer diameter of 80 $\mu$m exhibits a lower breaking failure rate.

The method for calculating breaking failure rate of optical fibers is disclosed in Y Mitsunaga et al., "Strength assurance of optical fiber based on screening test," Trans. IEICE July 1983, vol. J.66-B, No. 7, pp. 829-836, 1983. In general, it is required to assure a breaking failure rate of optical fibers of $10^{-5}$ (one failure per 100,000 units) for a duration of 20 years. When an optical fiber having an outer a diameter of 125 $\mu$m is employed in a conventional WDM coupler with a bending radius of 10 mm, the breaking failure rate would exceed $10^{-5}$ by far in 20 years, meaning that this WDM couple cannot withstand practical use. In contrast, it was confirmed from the document described above that when an optical fiber of the present invention is employed in the WDM coupler with a bending radius of 10 mm, a breaking failure rate of $10^{-5}$ can be assured for a duration of 20 years.

Furthermore, the WDM coupler including the optical fiber of the present invention has a coupling length of 5.4 mm, which is far shorter than the coupling length of a conventional WDM coupler.

Similar to Example 6, since the optical fiber of the present invention includes an inner cladding, and has an outer diameter of 80 $\mu$m, it is possible to reduce the coupling length. In the WDM coupler 41 of Example 7, the coupling length could be significantly reduced to 5.4 mm, and consequently the overall size of the WDM coupler 41 was reduced.

Since the WDM coupler is used in an erbium-doped optical fiber amplifier, the WDM coupler 41 of this example will be spliced to an optical fiber having a different MFD. Similar to Example 1, since the WDM coupler 41 included an optical fiber in which the concentrations of the dopants in the inner cladding were about 1% by weight, about 1% by weight, and about 0.5% by weight, for germanium, phosphorus, and fluorine, the WDM coupler 41 could provide a splicing with low loss and a sufficient strength as Example 1.

Accordingly, it was confirmed that a WDM coupler that includes an optical fiber of the present invention including an inner cladding and having an outer diameter of 80 $\mu$m has a smaller dimension and smaller allowable bending radius than a conventional WDM coupler, and exhibits an excellent splicing characteristic. Accordingly, the WDM coupler of the present invention can be applied to an erbium-doped optical fiber amplifier having a reduced size than a conventional erbium-doped optical fiber amplifier.

It should be noted that various embodiments of the present invention are possible, being not limited to the examples described above.

INDUSTRIAL APPLICABILITY

As described above, since the optical fiber of the present invention is an optical fiber including a core that is provided at a center, the core being made of silica glass containing at least germanium, an inner cladding having a large diffusion coefficient, the inner cladding being provided around the core and concentric to the core, and an outer cladding having a small diffusion coefficient, the outer cladding being provided around the inner cladding, in which the inner cladding contains germanium, and a concentration of germanium in the core is about 200% or more of a concentration of germanium in the inner cladding, it can be spliced with an optical fiber having a different MFD, such as a single-mode optical fiber or an erbium-doped optical fiber, with low splice loss and a sufficient splicing strength.

## Claims

1. An optical fiber (14), comprising:

   - a core (21) that is provided at a center, the core being made of silica glass containing at least germanium; - an inner cladding (22) made of silica glass, the inner cladding being provided concentric to the core; and - an outer cladding (23) made of silica glass, the outer cladding being provided around the inner cladding, wherein the inner cladding (22) contains germanium, and a concentration of germanium in the core (21) is about 200% or more of a concentration of germanium in the inner cladding, a diameter of the inner cladding (22) is between 10 $\mu$m and 40 $\mu$m, a refractive index of the inner cladding (22) being substantially the same as a refractive index of silica glass, a diffusion coefficient of germanium diffused in the outer cladding (23) being relatively smaller than in the inner cladding (22), and fluorine is doped in the core (21) with a fluorine concentration of between 0 and 1.0% by weight, **characterized in that** the inner cladding (22) contains germanium of between 0.2% by weight and 1.5% by weight, phosphorus of between 0.5% by weight and 1.5% by weight, and fluorine of between 0.1% by weight and 1.0% by weight.

2. The optical fiber(14) according to claim 1, wherein an outer diameter of the optical fiber is between 70 $\mu$m and 90 $\mu$m.

3. The optical fiber (14) according to claim 1 or 2, further comprising two stress-applying parts (24) that are symmetrically disposed with respect to the core (21) within the cladding around the core.

4. The optical fiber (14) according to any one of the preceding claims, which is spliced with a second silica glass optical fiber (11, 13) by means of heating using an arc discharge for a time suitable to obtain a minimum splicing loss, wherein an enlarged mode field diameter of the optical fiber during splicing is matched with an enlarged mode field diameter of the second silica glass optical fiber, and a failure tension at which a cumulative failure probability becomes 50% is over 2.0 GPa after the fusion splicing.

5. The optical fiber (14) according to claim 4, wherein the second silica glass optical fiber is a single mode optical fiber (13).

6. The optical fiber (14) according to claim 4, wherein the second silica glass optical fiber is an erbium-doped optical fiber (11).

7. An optical fiber coupler fabricated using the optical fiber according to any one of claims 4 to 6.

8. An erbium-doped optical fiber amplifier (40) fabricated using the optical fiber according to any one of claims 4 to 6.

9. An optical waveguide fabricated using the optical fiber according to any one of claims 4 to 6 as a pigtail fiber.

## Patentansprüche

1. Eine optische Faser (14) umfassend:

   - einen mittig vorgesehenen Kern (21), wobei der Kern aus Quarzglas enthaltend zumindestens Germanium hergestellt ist ;
   - einen Innenverkleidung (22) hergestellt aus Quarzglas, wobei die Innenverkleidung konzentrisch zum Kern vorgesehen ist; und
   - eine Außenverkleidung (23) hergestellt aus Quarzglas, wobei die Außenverkleidung um die Innenverkleidung herum vorgesehen ist, wobei die Innenverkleidung (22) Germanium enthält, und eine Konzentration des Germaniums in dem Kern (21) ungefähr 200 % oder mehr einer Konzentration von Germanium in der Innenverkleidung ist, wobei ein Durchmesser der Innenverkleidung (22) zwischen 10 $\mu$m und 40 $\mu$m ist, wobei ein Brechungsindex der Innenverkleidung (22) im Wesentlichen der gleiche ist wie ein Brechungsindex von Quarzglas, wobei ein Diffusionskoeffizient von Germanium, das in der Außenverkleidung (23) diffundiert ist, in Bezug auf die Innenverkleidung (22) kleiner ist, und der Kern (21) mit Fluor mit einer Fluorkonzentration zwischen 0 und 1,0 Gew.% dotiert ist,

**dadurch gekennzeichnet, dass** die Innenverkleidung (22) Germanium zwischen 0,2 Gew.% und 1,5 Gew.%, Phosphor zwischen 0,5 Gew.% und 1,5 Gew.% und Fluor zwischen 0,1 Gew.% und 1,0 Gew.% enthält.

**2.** Optische Faser (14) nach Anspruch 1, wobei ein äußerer Durchmesser der optischen Faser zwischen 70 μm und 90 μm ist.

**3.** Optische Faser (14) nach Anspruch 1 oder 2, des Weiteren zwei Teile (24) zur Anlegen einer Belastung umfassend, die symmetrisch in Bezug auf den Kern (21) innerhalb der Verkleidung um den Kern herum angeordnet sind.

**4.** Optische Faser (14) gemäß einem der vorhergehenden Ansprüche, welche mit einer zweiten optischen Quarzglasfaser (11, 13) mittels Erwärmen unter Verwendung einer Bogenentladung für einen Zeitraum geeignet, um einen minimalen Verbindungsverlust zu erhalten, verbunden ist, wobei ein vergrößerter Betriebsbereichsdurchmesser der optischen Faser während des Verbindens auf einen vergrößerten Betriebsbereichsdurchmesser der zweiten optischen Quarzglasfaser abgestimmt wird, und eine Ausfallspannung, bei welcher eine kumulative Ausfallwahrscheinlichkeit von 50 % besteht, ist nach der Fusionsverbindung über 2,0 GPa.

**5.** Optische Faser (14) nach Anspruch 4, wobei die zweite optische Quarzglasfaser eine einzelne optische Betriebsfaser (13) ist.

**6.** Optische Faser (14) nach Anspruch 4, wobei die zweite optische Quarzglasfaser eine mit Erbium dotierte optische Faser (11) ist.

**7.** Ein optischer Faserkoppler hergestellt unter Verwendung der optischen Faser nach einem der Ansprüche 4 bis 6.

**8.** Ein mit Erbium dotierter optischer Faserverstärker (40), hergestellt unter der Verwendung der optischen Faser nach einem der Ansprüche 4 bis 6.

**9.** Ein optischer Lichtleiter hergestellt unter Verwendung der optischen Faser gemäß einem der Ansprüche 4 bis 6 als ein Abschlussstück von Lichtleitfasern.

**Revendications**

**1.** Fibre optique (14), comprenant :

- une âme (21) qui est prévue au niveau d'un centre, l'âme étant faite de verre de silice contenant au moins du germanium; - une gaine intérieure (22) faite de verre de silice, la gaine intérieure étant prévue de façon concentrique par rapport à l'âme; et - une gaine extérieure (23) faite de verre de silice, la gaine extérieure étant prévue autour de la gaine intérieure, dans laquelle la gaine intérieure (22) contient du germanium, et une concentration en germanium dans l'âme (21) est environ 200 % ou plus d'une concentration en germanium dans la gaine intérieure, un diamètre de la gaine intérieure (22) est entre 10 μm et 40 μm, un indice de réfraction de la gaine intérieure (22) étant sensiblement identique à un indice de réfraction du verre de silice, un coefficient de diffusion de germanium diffusé dans la gaine extérieure (23) étant relativement inférieur à celui dans la gaine intérieure (22), et du fluor est dopé dans l'âme (21) avec une concentration en fluor d'entre 0 et 1,0 % en poids, **caractérisée en ce que** la gaine intérieure (22) contient du germanium entre 0,2 % en poids et 1,5 % en poids, du phosphore entre 0,5 % en poids et 1,5 % en poids, et du fluor entre 0,1 % en poids et 1,0 % en poids.

**2.** Fibre optique (14) selon la revendication 1, dans laquelle un diamètre extérieur de la fibre optique est entre 70 μm et 90 μm.

**3.** Fibre optique (14) selon la revendication 1 ou 2, comprenant en outre deux parties d'application de contrainte (24) qui sont disposées symétriquement par rapport à l'âme (21) à l'intérieur de la gaine autour de l'âme.

**4.** Fibre optique (14) selon une quelconque des revendications précédentes, qui est épissée avec une seconde fibre optique en verre de silice (11, 13) par chauffage en utilisant une décharge à arc pendant une durée appropriée pour obtenir une perte d'épissage minimum,

dans laquelle un diamètre de champ modal agrandi de la fibre optique durant l'épissage est assorti à un diamètre de champ modal agrandi de la seconde fibre optique en verre de silice, et
une tension de rupture à laquelle une probabilité de rupture cumulative devient 50 % est supérieure à 2,0 GPa après l'épissage par fusion.

5. Fibre optique (14) selon la revendication 4, dans laquelle la seconde fibre optique en verre de silice est une fibre optique monomodale (13).

6. Fibre optique (14) selon la revendication 4, dans laquelle la seconde fibre optique en verre de silice est une fibre optique dopée à l'erbium (11).

7. Coupleur de fibre optique fabriqué en utilisant la fibre optique selon une quelconque des revendications 4 à 6.

8. Amplificateur à fibre optique dopée à l'erbium (40) fabriqué en utilisant la fibre optique selon une quelconque des revendications 4 à 6.

9. Guide d'ondes optique fabriqué en utilisant la fibre optique selon une quelconque des revendications 4 à 6 en tant que fibre amorce.

FIG. 1

FIG. 2A

FIG. 2B

## FIG. 3

---- ERBIUM-DOPED OPTICAL FIBER
—— CONVENTIONAL OPTICAL FIBER
    WAVELENGTH MULTIPLEXING COUPLER
—— OPTICAL FIBER OF THE PRESENT INVENTION

FIG. 4

FIG. 5

FIG. 6

1550 nm
SIGNAL LIGHT

31

35

32  1550 nm
SIGNAL LIGHT

1% IS EMITTED

33

FIG. 7

40

42        41        42

45                          44

                            43

42        42

## FIG. 8

1550 nm SIGNAL LIGHT ⇒    4    3    4    1    AMPLIFIED SIGNAL LIGHT OUTPUT ⇒

5

2

## FIG. 9

## FIG. 10

**EP 1 533 634 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002199959 A
- JP 2911932 B
- JP 09236721 B

### Non-patent literature cited in the description

- **Y Mitsunaga et al.** Strength assurance of optical fiber based on screening test. *Trans. IEICE,* July 1983, vol. J.66-B (7), 829-836